Europäisches Patentamt

European Patent Office

Office européen des brevets

(11) Publication number: 0 350 049
A2

# EUROPEAN PATENT APPLICATION

(21) Application number: 89112395.2

(22) Date of filing: 06.07.89

(51) Int. Cl.4: G01N 35/00

(30) Priority: 06.07.88 JP 166805/88

(43) Date of publication of application:
10.01.90 Bulletin 90/02

(84) Designated Contracting States:
DE FR GB NL

(71) Applicant: KABUSHIKI KAISHA TOSHIBA
72, Horikawa-cho Saiwai-ku
Kawasaki-shi Kanagawa-ken 210(JP)

(72) Inventor: Onizawa, Hitoshi c/o Intellectual
Property Div.
Kabushiki Kaisha Toshiba 1.1 Shibaura
1-chome
Minato-ku Tokyo 105(JP)

(74) Representative: Blumbach Weser Bergen
Kramer Zwirner Hoffmann Patentanwälte
Radeckestrasse 43
D-8000 München 60(DE)

(54) Method and system for generating alarm in automatic chemical analysis apparatus.

(57) Alarm units (13a ~ 13e) for generating alarm sounds having, e.g., different tone are arranged in the respective automatic chemical analysis apparatuses (12a ~ 12e) in an automatic chemical analysis system. When a change occurs in an apparatus, a detection signal is output from a predetermined detector (18-1; 18-2; ...; 18-n) which detects the change. A control section (19) reads out sound data from a RAM (30) on the basis of the detection signal, and outputs the readout sound data to a PSG (programmable sound generator) (20). The PSG (20) generates a predetermined alarm sound from a speaker (17) on the basis of the readout sound data. An operator can easily distinguish an apparatus which is generating the alarm sound and can quickly respond to the change. Since the alarm units generate different alarm sounds corresponding to the change levels of the apparatus, the load of the operator can be reduced.

F I G. 3

# Method and system for generating alarm in automatic chemical analysis apparatus

The present invention relates to a method and system for generating an alarm in an automatic chemical analysis apparatus.

A conventional automatic chemical analysis apparatus causes a solution sampled from a serum of a human body with a predetermined reagent to measure a concentration of a solution reactecd by colorimetry or the like, thereby analyzing predetermined items such as total protein (TP), uric acid (UA), and a triglyceride (TG).

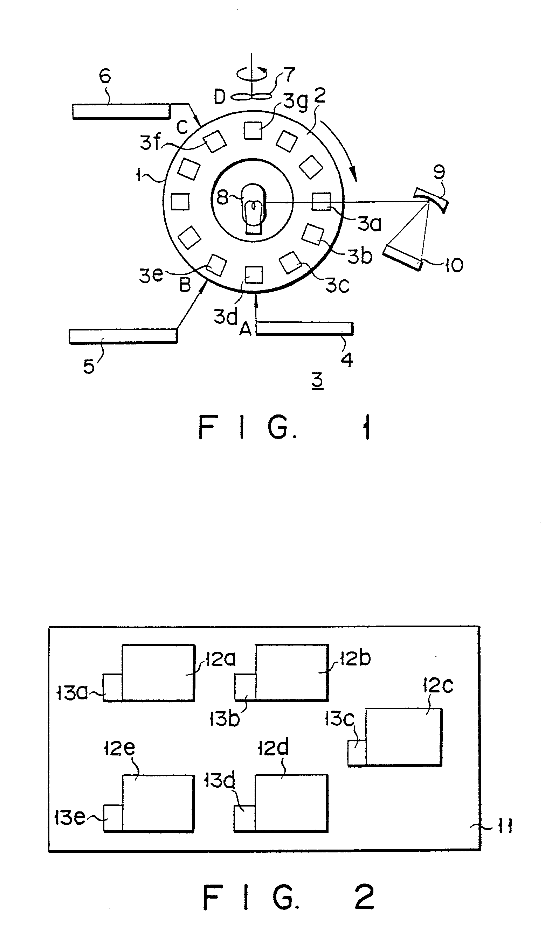

Fig. 1 is a schematic view showing an arrangement of an automatic chemical analysis apparatus. A plurality of reaction containers 3a, 3b, 3c,... are placed in constant-temperature water 2 in a thermostat 1 and are moved by a predetermined cycle in a direction of an arrow. A sample distributing probe 4, a first reagent distributing probe 5, a second reagent distributing probe 6, and a stirrer 7 are located at peripheral positions A, B, C, and D of the thermostat 1, respectively.

When a movement of the reaction containers 3 is stopped, the sample solution is distributed by the sample distributing probe 4 to the reaction container 3d located at the position A. The first reagent is distributed by the first reagent distributing probe 5 to the reaction container 3e located at the position B. The second reagent is distributed by the second reagent distributing probe 6 to the reaction container 3f located at the position C. The sample solution and the reagent in the reaction container 3g located at the position D are stirred by the stirrer 7. The number of reagents is not limited to two.

Light is emitted outward from a light source 8 located at the central position of the thermostat 1. This light is transmitted through a reaction solution (containing both the sample solution and the reagent) of each reaction container. Light transmitted through the reaction container is detected by a photometric system having a diffraction grating 9 and a detector 10. Therefore, the concentration of a specific component of the reaction solution can be analyzed.

For example, a plurality of automatic chemical analysis apparatuses are installed in medical organizations such as a large examination center to systematize automatic analysis of a large quantity. In this case, manipulations and maintenance of each apparatus are performed by special operators. However, the special operators cannot always check each apparatus. In order to inform the operator of a change of the apparatus, a shortage of reagents, and the like, an alarm unit such as a buzzer is arranged in each apparatus.

When an alarm sound is generated by an alarm unit in each automatic chemical analysis apparatus, it takes a relatively long period of time for an operator to distinguish an apparatus which is currently generating an alarm sound. In particular, when alarm sounds are simultaneously generated by a plurality of apparatuses, it takes a long period of time for an operator to distinguish the apparatuses, thereby overloading the operator and disabling quick response to the change of the apparatus.

A conventional alarm sound does not represent a level of the change. That is, the alarm sound is generated regardless of the fact whether the change is related to an apparatus failure. For this reason, the load on the operator is increased. However, for example, when an alarm sound is generated by existence of a reaction container not containing a sample, the operator need not immediately handle because samples contained in other reaction containers can be analyzed and samples for the empty containers can then be analyzed. In this case, if a level of the change in the apparatus can be signaled to the operator, the load on the operator can be reduced.

Strong demand has arisen for an alarm for informing an operator of a level of the change in an automatic chemical analysis apparatus which is currently generating an alarm sound.

It is an object of the present invention to provide a method and system for generating an alarm in an automatic chemical analysis apparatus.

According to one aspect of the present invention, there is provided a method of generating an alarm signal in an automatic chemical analysis apparatus, the method comprising the steps of:
storing sound data;
detecting a level of change in the automatic chemical analysis apparatus;
reading out the sound data corresponding to the level of change; and
generating the alarm signal in accordance with the readout sound data.

According to another aspect of the present invention, there is provided a system for generating an alarm signal in an automatic chemical analysis apparatus, the system comprising:
storing means for storing sound data;
detecting means for detecting a level of change in the automatic chemical analysis apparatus; and
generating means for generating the alarm signal in accordance with the stored sound data corresponding to the level of change.

This invention can be more fully understood from the following detailed description when taken in conjunction with the accompanying drawings, in which:

Fig. 1 is a schematic view of an automatic chemical analysis apparatus;

Fig. 2 is a view showing an arrangement of an automatic chemical analysis system according to an embodiment of the present invention; and

Fig. 3 is a block diagram of an alarm unit in the automatic chemical analysis apparatus.

A preferred embodiment of the present invention will be described in detail with reference to the accompanying drawings.

As shown in Fig. 2, automatic chemical analysis apparatuses 12a to 12e installed in an examination room 11 perform chemical analysis according to colorimetry as in the apparatus shown in Fig. 1. Alternatively, the apparatuses 12a to 12e perform other chemical analysis using an electrode method, an immunoanalysis method and the like.

The apparatuses 12a to 12e have alarm units 13a to 13e. The alarm units 13a to 13e generate alarm signals having a tone and a voice.

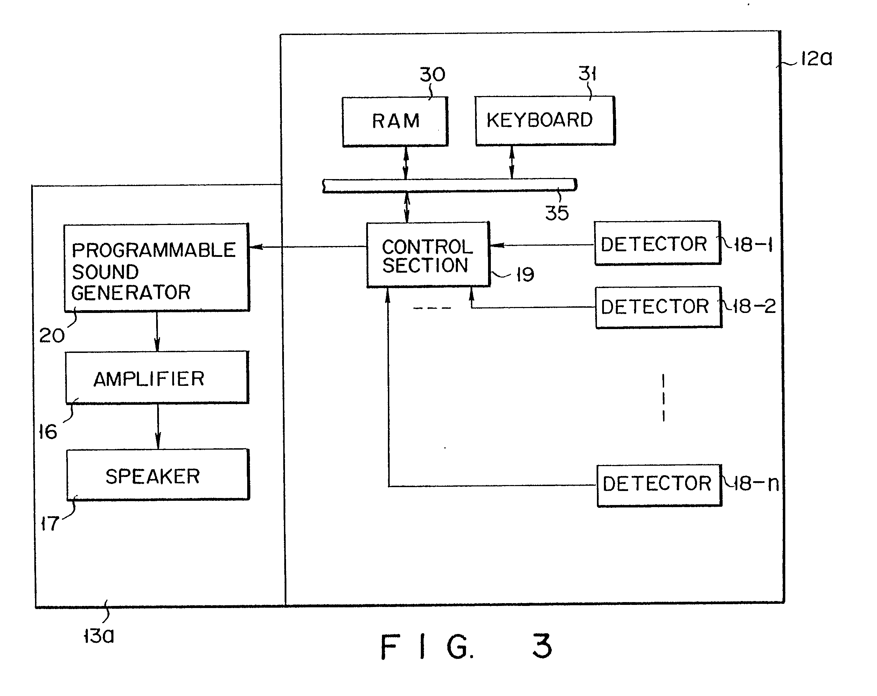

As shown in Fig. 3, the alarm unit 13a comprises a PSG (Programmable Sound Generator) 20, an amplifier 16, and a speaker 17. An audible frequency (20 to 20,000 Hz) sound signal output from the PSG 20 is amplified to a predetermined level by the amplifier 16, and the amplified signal is output as an alarm signal to the speaker 17. The alarm units 13b to 13e have the same arrangement as that of the alarm unit 13a and generate different alarm sounds from the corresponding speakers.

For example, a detector 18-1 for detecting a change (primarily a mechanical change of the apparatus) associated with a failure of the apparatus, a detector 18-2 for detecting a shortage of reagents,... a detector 18-n for detecting an end of chemical analysis are arranged at predetermined positions of the apparatus 12a. When a change occurs in the apparatus 12a, a predetermined one of the detectors 18-1 to 18-n detects the change. A detection signal from this detector is input to a control section 19 including a microprocessor.

A RAM 30 and a keyboard 31 are connected to the control section 19 through a bus 35. The control section 19 reads out sound data from the RAM 30 on the basis of the detection signal and outputs the readout sound data to the PSG 20. Therefore, a predetermined alarm sound is generated from the speaker 17. The RAM 30 stores sound data representing alarm sounds corresponding to change levels. As described above, sound data representing different alarm sounds are stored in each apparatus when a plurality of apparatuses are installed in a single examination room. These sound data include tone data and voice data.

An operation of this system will be described below.

When a change occurs in the automatic chemical analysis apparatuses 12b to 12e, this change is detected by the predetermined one of the detectors 18-1 to 18-n. A detection signal representing its detection result is output to the control section 19. The control section 19 distinguishes a change level in accordance with the detection signal and reads out the sound data corresponding to this change level from the RAM 30. The readout sound data is transferred to the PSG 20. The PSG 20 generates an alarm signal on the basis of the transferred sound data. The alarm signal is output to the speaker 17 through the amplifier 16.

When an operator memorizes alarm sounds corresponding to the alarm units 13a to 13e in advance, the operator can immediately distinguish the automatic chemical analysis apparatus which is currently generating the alarm sound. Easy distinction can also be achieved by generating voice sounds corresponding to the alarm units 13a to 13e from the speakers 17.

Even when the plurality of alarm sounds are generated, the operator is not confused of the alarm sounds and can accurately distinguish the automatic chemical analysis apparatus which is currently generating the alarm sound. Further, when different alarm sounds for different change levels are generated, the operator is not overloaded and can quickly handle the apparatus in which a change occurred.

In addition, the volume of the alarm sound can be controlled in accordance with the installation environments.

As in the above embodiment, the alarm unit having a sound source for generating an electronic sound can be arranged at low cost due to the recent development of the electronic techniques. However, the sound source is not limited to an electronic sound source, but other sound sources may be used to generate different alarm sounds.

The present invention has been exemplified by the particular embodiment described above, but is not limited thereto. Various changes and modifications may be made within the scope of the invention.

Claims

1. A method of generating an alarm signal in an automatic chemical analysis apparatus, characterized by the steps of:
storing sound data;
detecting a level of change in the automatic chemical analysis apparatus;
reading out the sound data corresponding to the level of change; and
generating the alarm signal in accordance with the readout sound data.

2. The method according to claim 1, characterized in that the alarm signal includes a voice signal.

3. A system for generating an alarm signal in an automatic chemical analysis apparatus, characterized by:

storing means (30) for storing sound data;

detecting means (18-1 ~ 18-n) for detecting a level of change in the automatic chemical analysis apparatus; and

generating means (13a) for generating the alarm signal in accordance with the stored sound data corresponding to the level of change.

4. The system according to claim 3, characterized in that the alarm signal includes a voice signal.

89/87170 EP

F I G. 1

F I G. 2

F I G. 3

EP 0 350 049 A2